# EUROPÄISCHE PATENTSCHRIFT

(11) **EP 2 146 353 B1**
(45) Veröffentlichungstag und Bekanntmachung des Hinweises auf die Patenterteilung: **29.05.2013**
(21) Anmeldenummer: 09163096.2
(22) Anmeldetag: 18.06.2009
(51) Int. Cl.: G21C 19/07

(54) **Lagergestellanordnung zum Lagern nuklearer Brennelemente**
Storage rack system for storing nuclear reactor fuel assemblies
Dispositif de stockage d'assemblages de combustible nucléaire dans des râteliers

(30) Priorität: 26.06.2008 EP 08159132; 04.07.2008 EP 08159766
(43) Veröffentlichungstag der Anmeldung: 20.01.2010
(73) Patentinhaber: CCI AG, 8404 Winterthur (CH)
(72) Erfinder: Kielbowicz, Stanislaw, 8820 Wädenswil (CH)
(74) Vertreter: Schmidtchen, Jürgen Christian

(56) Entgegenhaltungen:
- EP-A- 1 335 388
- WO-A-80/00046
- FR-A- 2 433 809
- JP-A- 9 089 028
- JP-A- 2001 228 286
- US-A- 4 042 828
- US-A- 4 187 433
- US-A- 5 361 281

## Beschreibung

Die Erfindung betrifft eine Lagergestellanordnung zum Lagern nuklearer Brennelemente gemäss Oberbegriff von Anspruch 1.

Nukleare Brennelemente und insbesondere abgebrannte nukleare Brennelement werden in Lagerbecken gelagert, die mit einem Kühlmittel wie beispielsweise Wasser gefüllt sind, das zugleich als Abschirmung gegen die Strahlung der Brennelemente dient. Die abgebrannten nuklearen Brennelemente verbleiben solange im Lagerbecken, bis sie der Wiederaufbereitung oder fallweise Endlagerung zugeführt werden. Zur sicheren Lagerung der nuklearen Brennelemente wurden Lagergestelle entwickelt, wobei ein Lagerbecken mehrere Lagergestelle aufnehmen kann, die nebeneinander und fallweise auch übereinander angeordnet sein können.

In Dokument US 4 042 828 ist ein Lagergestell zur Lagerung nuklearer Brennelemente in einem Lagebecken beschrieben, Das Lagergestell enthält mehrere, aneinandergereihte vertikale Umhüllungen, die Kanäle zur Aufnahme der Brennelemente bilden. Die Umhüllungen, die einen quadratischen Querschnitt aufweisen, sind in einem offenen Gestellrahmen angeordnet und am unteren und oberen Ende offen, so dass das im Lagerbecken enthaltene Wasser in den Umhüllungen zirkulieren kann, um die Brennelemente zu kühlen. Die in die Umhüllungen eingesetzten Brennelemente sind über Auflagen einzeln auf dem Boden des Lagerbeckens abgestützt.

Aus Dokument US 4 187 433 ist ein weiteres Lagergestell zur Lagerung nuklearer Brennelemente in einem Lagerbecken bekannt. Das Lagergestell umfasst einen oberen und unteren Gitterrahmen mit übereinander angeordneten Öffnungen, in die vertikal bewegliche Lagerschächte zur Aufnahme der Brennelemente eingesetzt sind. Auf diese Weise ist sowohl das Gewicht der Lagerschächte als auch das Gewicht der zugehörigen Brennelemente einzeln auf dem Boden des Lagerbeckens abgestützt.

Es hat sich gezeigt, dass die oben beschriebenen Lagergestelle aus dem Stand der Technik die Anforderungen an eine sichere Lagerung der Brennelement nur bedingt erfüllen, indem insbesondere während Erdbeben merkliche Verschiebungen der Lagergestelle in den Lagerbecken festgestellt wurden. Ein voll mit Brennelementen beladenes Lagergestell hat typisch ein Gewicht zwischen 30 t und 60 t, so dass die Kräfte, die während eines Erdbebens zwischen benachbarten Lagergestellen und zwischen den Lagergestellen und den Wänden des Lagerbeckens auftreten, erheblich sind und die Gefahr besteht, dass die Lagergestelle und die darin gelagerten Brennelemente und/oder die Auskleidung des Lagerbeckens während eines Erdbebens beschädigt werden, und dass dabei Radionuklide austreten können.

Die Figuren 13 und 14 aus dem oben genannten Dokument US 4 042 828 zeigen Halteklammern, mittels welchen nebeneinander liegende Lagergestelle verbunden werden können. Durch eine Verbindung der Lagergestelle könnte während eines Erdbebens ein Zusammenstoss zwischen den Lagergestellen zumindest im Prinzip vermieden werden. Die Konstruktionsweise der im genannten Dokument beschriebenen Lagergestelle erscheint jedoch ungeeignet, um grössere Horizontalkräfte aufzunehmen, so dass die Erdbebensicherheit mittels der Halteklammern nur beschränkt erhöht werden kann.

Um das Problem der Erdbeben induzierten Lagergestellverschiebungen und das damit verbundene Risiko der Kollision mit den Wänden des Lagerbeckens oder anderen im Lagerbecken installierten Vorrichtungen in den Griff zu bekommen, hat man versucht die Lagergestelle an den Wänden des Lagerbeckens abzustützen und/oder am Boden des Lagerbeckens zu verankern oder festzuschrauben. In der Vergangenheit sind mehrere Lagerbecken gebaut worden, die auf diesem Fix-Lagergestell-Prinzip basieren. Es hat sich aber schnell gezeigt, dass diesem Fix-Lagergestell-Prinzip Grenzen gesetzt sind. Bei höheren Erdbebenlasten und bei einer höheren Lagerdichte beziehungsweise bei höheren Massen der Lagerstelle entstehen lokal extrem hohe Spitzenlasten an den Verankerungsbeziehungsweise Abstützungsstellen, die zwangsweise zu Beschädigung dieser Strukturen führen würden, insbesondere auch zu Undichtigkeiten in der Auskleidung des Lagebeckens. Aus diesem Grund wurde eine Lösung gesucht, die für höhere Erdbebenlasten und höhere Lagerdichten geeignet ist.

Eine wesentliche Verbesserung dieser Problematik bietet das sogenannte "free sliding" Prinzip, das sich in den letzten Jahren bei neu erstellten Brennelement-Lagern durchgesetzt hat. Bei diesem Prinzip sind die Lagergestelle im Lagerbecken frei aufgestellt und können sich beim Erdbeben frei rutschend bewegen. Durch die bei der Bewegung auftretende Reibung wird ein grosser Teil der seismischen Energie vernichtet. Dieses Prinzip erlaubt die Eliminierung der lokal extrem hohen Spitzenlasten an den Verankerungs- beziehungsweise Abstützungsstellen der Lagergestelle, hat aber auch gewisse Nachteile:
- Ein Nachteil ist, dass die Erdbeben induzierten Lagergestellverschiebungen eine gewisse freie Zone rund um die Lagergestelle verlangen. Das ist gleichbedeutend mit einem Verlust an Lagerfläche, die sehr teuer ist.
- Ein weiterer Nachteil besteht darin, dass diese Verschiebungen zur Bildung unterschiedlich grosser, unregelmässiger Abstände zwischen den Lagergestellen führen und dass dadurch nach einem Erdbeben eine unregelmässige Anordnung der Lagergestellen entstehen kann, die zu Problemen bei der späteren Handhabung der eingelagerten Brennelementen führen kann.
- Ein weiterer Nachteil resultiert daraus, dass Lagergestelle, die teilweise und insbesondere einseitig beladen sind, bei hohen horizontalen Erdbebenbeschleunigungen zum Schwanken angeregt werden, wobei die Füsse der Lagergestelle zum Beispiel 10 bis 20 mm vom Boden des Lagerbeckens abheben können. Ein derartiges Schwanken der Lagergestelle erzeugt sehr hohe Aufprallkräfte auf dem Boden des Lagerbeckens, wodurch das Risiko einer Undichtigkeit des Lagerbeckens erheblich erhöht wird. Zudem wird eine verstärkte Tendenz zu Lagergestellverschiebung in Richtung der entlasteten Seite beobachtet, welche die Stabilität der Lagergestelle zusätzlich verschlechtert.

WO 80/00046 A betrifft Gestelle zum Zwischenlagern von aus Kernreaktoren aufgebauten Brennelementbündeln, bei denen Aufnahmerohre lose auf einer Bodenplatte stehen und seitlich durch ein Gerüst abgestützt sind, das fest mit der Bodenplatte verbunden ist.

JP 2001 228286 A offenbart eine Dämpfervorrichtung für Fässer, wobei ein Fass relativ zu einem Boden, auf dem es steht, gleiten kann.

FR-A-2433809 betrifft ein Gestell zum Zwischenlagern von Brennelementbündeln in einem Wasserbassin mit einer Bodenplatte und vertikal angeordneten Vierkant-Aufnahmerohren, die fußseitig mit einem nach innen gerichteten Flansch versehen und durch Verschrauben dieses Flansches an der Bodenplatte einseitig fest eingespannt sind.

EP-A-1335388 betrifft eine Vorrichtung zum Aufnehmen und Transportieren von Fässern, wobei die Fässer auf einer Bodenfläche gleiten können.

US-A-5361281 offenbart eine Lagergestellanordnung zum Lagern nuklearer Brennelemente, wobei die Lagergestellanordnung Lagergestelle aufweist, die nicht miteinander über eine gemeinsame Bodenplatte verbunden sind.

JP 09089028 A offenbart einen Gleitmechanismus, der eine Reibungskraft zwischen einem gleitenden Teil einer festen Oberfläche gemäß einem Gewicht eines zu ladenden Objekts auf eine optimale Größe einstellt.

US-A-4187433 offenbart eine Lagergestellanordnung mit mehreren Lagergestellen, wobei jeweils benachbarte Lagergestelle nicht mit mindestens einer gemeinsamen Bodenplatte verbunden sind.

Aufgabe der Erfindung ist es, eine Lagergestellanordnung zum Lagern nuklearer Brennelemente in einem Lagerbecken zur Verfügung zu stellen, die nach dem "free sliding" Prinzip aufgebaut ist, aber die oben beschriebenen Nachteile dieses Prinzips vermeidet oder stark reduziert.

Diese Aufgabe wird erfindungsgemäss durch die in Anspruch 1 definierte Lagergestellanordnung gelöst.

Die erfindungsgemässe Lagergestellanordnung zum Lagern nuklearer Brennelemente in einem Lagerbecken umfasst mindestens zwei Lagergestelle, die jeweils mehrere vertikale, nebeneinander angeordnete Kanäle zur Aufnahme der Brennelemente enthalten. Zusätzlich umfasst die Lagergestellanordnung eine oder mehrere Bodenplatten, wobei jeweils nebeneinander angeordnete Lagergestelle mit mindestens einer gemeinsamen Bodenplatte verbunden sind, und wobei die Bodenplatte oder Bodenplatten auf dem Boden des Lagerbeckens verschiebbar sind. Vorteilhafterweise sind die Lagergestelle auf der oder den Bodenplatten abgestützt. In einer vorteilhaften Ausführungsvariante sind die Lagergestelle zusammen mit der oder den Bodenplatten auf dem Boden des Lagerbeckens verschiebbar.

In einer weiteren vorteilhaften Ausführungsvariante sind die Bodenplatten am Umfang der Lagergestelle angeordnet, beispielsweise indem im Wesentlichen am gesamten Unfang der Lagergestelle Bodenplatten angeordnet sind.

In einer weiteren vorteilhaften Ausführungsvariante erstrecken sich die Bodenplatte oder Bodenplatten über mindestens 80% der Grundfläche der Lagergestellanordnung oder im Wesentlichen über die gesamte Grundfläche der Lagergestellanordnung. Unabhängig von den oben erwähnten Ausführungsvarianten kann es vorteilhaft sein, die Bodenplatte oder Bodenplatten grösser als die Grundfläche eines Lagegestells zu wählen.

In einer vorteilhaften Ausführungsform sind die Lagergestelle jeweils über eine oder mehrere höhenverstellbare Verbindungen mit der oder den Bodenplatten verbunden. In diesem Fall können die höhenverstellbaren Verbindungen bei Bedarf kegelförmige oder sphärische Auflageelemente enthalten, um Winkelabweichungen zwischen den Lagergestellen und der beziehungsweise den Bodenplatten auszugleichen. Mittels der höhenverstellbaren Verbindungen können Unebenheiten des Lagerbeckenbodens ausgeglichen werden.

In einer weiteren vorteilhaften Ausführungsform sind die Lagergestelle über Schraubverbindungen mit der oder den Bodenplatten verbunden. Vorteilhafterweise sind in der oder den Bodenplatten Gewinde und Schraubverbindungen ausgebildet, oder es können an der oder den Bodenplatten Gewindebolzen vorgesehen sein.

Die erfindungsgemässe Lagergestellanordnung hat den Vorteil, dass über die Bodenplatte oder Bodenplatten eine stabile Verbindung zwischen den Lagergestellen besteht beziehungsweise hergestellt werden kann. Die Bodenplatten sind auf dem Boden des Lagerbeckens gleitend verschiebbar, so dass sich die derart verbundenen Lagergestelle unter seismischen Beschleunigungen als Block beziehungsweise Lagergestellanordnung frei verschieben können. Vorteilhaft ist dabei, dass die Horizontalkomponente von Erschütterungen nicht voll vom Lagerbeckenboden auf die Lagergestellanordnung übertragen wird. Dies gilt insbesondere für die Übertragung der höherfrequenten Anteile der Horizontalkomponente, die durch die hohe Masse der Lagergestellanordnung und die verschiebbare Anordnung derselben stark bedämpft wird. Darüber hinaus werden Spannungen in der Lagergestellanordnung, die durch thermische bedingte Längenänderungen entstehen können, dank der verschiebbaren Anordnung der Lagergestelle auf ein unschädliches Mass begrenzt. Vorteilhaft ist zudem, dass die Bodenplatten bezüglich der Vertikalkomponente von Erschütterungen als hydraulische Dämpfungselemente wirken. Ebenso werden das Schwanken der Lagergestelle sowie Kippbewegungen der Lagergestelle durch die Bodenplatte oder Bodenplatten wirksam bedämpft, indem die Bodenplatten einerseits die Verbindung der Lagergestelle untereinander sicherstellen und andererseits als hydraulische Dämpfungselemente wirken.

Die seismischen Analysen zeigen, dass die Bodenplatten, die jeweils benachbarte Lagergestelle verbinden, stark dämpfend auf die vertikalen und horizontalen Bewegungen wirken und dass durch die Verbindung benachbarter Lagergestelle die bleibenden Verschiebungen zwischen den Lagergestellen nach einem Erdbeben eliminiert werden. Weiter werden durch die Verbindung benachbarter Lagergestelle auch die Verschiebungen der Lagerstellanordnung stark reduziert, da diejenigen Lagergestelle, die teilweise und insbesondere einseitig beladen sind, an die vergleichsweise grosse Masse der übrigen Lagergestelle gekoppelt sind, was den Bewegungsprozess entscheidend bremst.

Die obige Beschreibung von Ausführungsformen und -varianten dient lediglich als Beispiel. Weitere vorteilhafte Ausführungen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen
- Fig. 1: ein Ausführungsbeispiel einer Lagergestellanordnung gemäss vorliegender Erfindung in Seitenansicht,
- Fig. 2A: ein Ausführungsbeispiel für die Verteilung der Bodenplatten in einer Lagergestellanordnung gemäss vorliegender Erfindung,
- Fig. 2B: ein zweites Ausführungsbeispiel für die Verteilung der Bodenplatten,
- Fig. 2C: ein drittes Ausführungsbeispiel für die Verteilung der Bodenplatten,
- Fig. 3A: ein Ausführungsbeispiel für die Verbindungen zwischen einer Bodenplatte und zwei Lagergestellen in einer Lagergestellanordnung gemäss vorliegender Erfindung,
- Fig. 3B: ein zweites Ausführungsbeispiel für die Verbindungen zwischen einer Bodenplatte und zwei Lagergestellen,
- Fig. 4A, B: zwei Ausführungsbeispiele eines Lagergestells zur Verwendung in einer Lagergestellanordnung gemäss vorliegender Erfindung,
- Fig. 5: eine Ausführungsform der Kanalstruktur im Lagegestell gemäss Fig. 4B,
- Fig. 5A, B: eine Ausführungsform der Blechteile für den Aufbau der Kanalstruktur gemäss Fig. 5, und,
- Fig. 6: eine Ausführungsform der Grundeinheit des Lagegestells gemäss Fig. 4B,

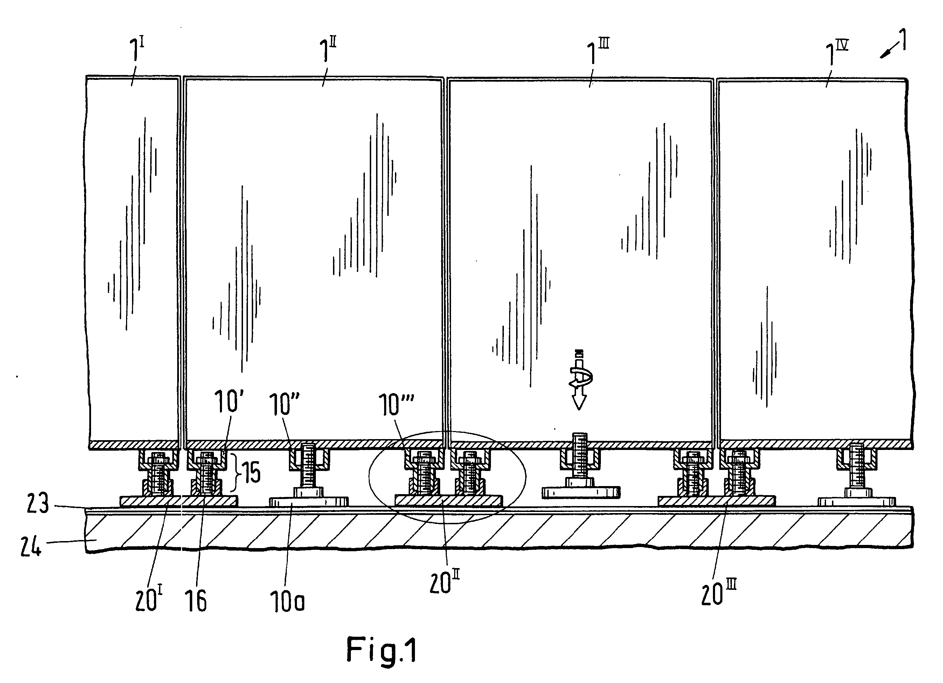

Das in Fig. 1 gezeigte Ausführungsbeispiel einer Lagergestellanordnung 1 zum Lagern nuklearer Brennelemente in einem Lagerbecken umfasst mindestens zwei Lagergestelle 1^{I-IV}, die jeweils mehrere vertikale, nebeneinander angeordnete Kanäle zur Aufnahme der Brennelemente enthalten. Zusätzlich umfasst die Lagergestellanordnung 1 eine oder mehrere Bodenplatten 20^{I-III}, wobei jeweils nebeneinander angeordnete Lagergestelle mit mindestens einer gemeinsamen Bodenplatte verbunden sind, und wobei die Bodenplatte oder Bodenplatten auf dem Boden 24 des Lagerbeckens verschiebbar sind. Vorteilhafterweise sind die Lagergestelle 1^{I-IV} auf der oder den Bodenplatten 20^{I-III} abgestützt. In einer vorteilhaften Ausführungsvariante sind die Lagergestelle 1^{I-IV} zusammen mit der oder den Bodenplatten auf dem Boden 24 des Lagerbeckens verschiebbar. Fallweise kann auf dem Boden 24 des Lagerbeckens eine Auskleidung 23 vorgesehen sein, auf der die Bodenplatten und/oder Lagergestelle verschiebbar sind. Die Auskleidung 23 dient zum Abdichten des Lagerbeckens und kann beispielsweise aus Stahl hergestellt sein.

In dem in Fig. 1 gezeigten Ausführungsbeispiel enthält die Lagergestellanordnung 1 vier in einer Richtung aneinander gereihte Lagergestelle 1^{I-IV}. Es ist jedoch auch möglich zwei, drei oder mehr als vier Lagergestelle aneinanderzureihen, und/oder in einer Richtung senkrecht dazu eine oder mehrere weitere Reihen anzufügen, um eine Lagergestellanordnung der gewünschten Grösse zu bilden.

In einer vorteilhaften Ausführungsform sind die Lagergestelle 1^{I-IV} jeweils über mehrere höhenverstellbare Verbindungen 15 mit der oder den Bodenplatten 20^{I-III} verbunden. In diesem Fall können die höhenverstellbaren Verbindungen bei Bedarf kegelförmige oder sphärische Auflageelemente enthalten, um Winkelabweichungen zwischen den Lagergestellen und der beziehungsweise den Bodenplatten auszugleichen. Mittels der höhenverstellbaren Verbindungen können Unebenheiten des Lagerbeckenbodens ausgeglichen werden.

In einer weiteren vorteilhaften Ausführungsform sind die Lagergestelle 1^{I-IV} über Schraubverbindungen, beispielsweise mittels Gewindebolzen 16, mit der oder den Bodenplatten 20^{I-III} verbunden. Vorteilhafterweise sind in der oder den Bodenplatten Gewinde und Schraubverbindungen ausgebildet, oder es können an der oder den Bodenplatten Gewindebolzen vorgesehen sein.

In einer vorteilhaften Ausführungsvariante sind die Lagergestelle 1^{I-IV} jeweils mit Stützelementen 10', 10", 10"' versehen, die fest mit den Lagergestellen verbunden sind. Die Verbindung der Lagergestelle mit der oder den Bodenplatten erfolgt in diesem Fall, wie in Fig. 1 gezeigt, über die Stützelemente. In einer weiteren vorteilhaften Ausführungsvariante können an den Lagergestellen 1^{I-IV} zusätzlich Abstützungen 10a vorgesehen sein, um die Lagergestelle zwischen der oder den Bodenplatten 20^{I-III} auf dem Boden des Lagerbeckens abzustützen. Die Abstützungen können, wie in Fig. 1 gezeigt, höhenverstellbar sein, beispielsweise indem diese ein Gewinde enthalten, um Unebenheiten des Lagerbeckenbodens auszugleichen. In dem in Fig. 1 gezeigten Ausführungsbeispiel liegt die Abstützung des Lagergestells 1^{III} noch nicht auf dem Boden des Lagerbeckens auf und muss noch abgesenkt werden, beispielsweise durch Drehen einer an der Abstützung vorgesehenen Gewindestange.

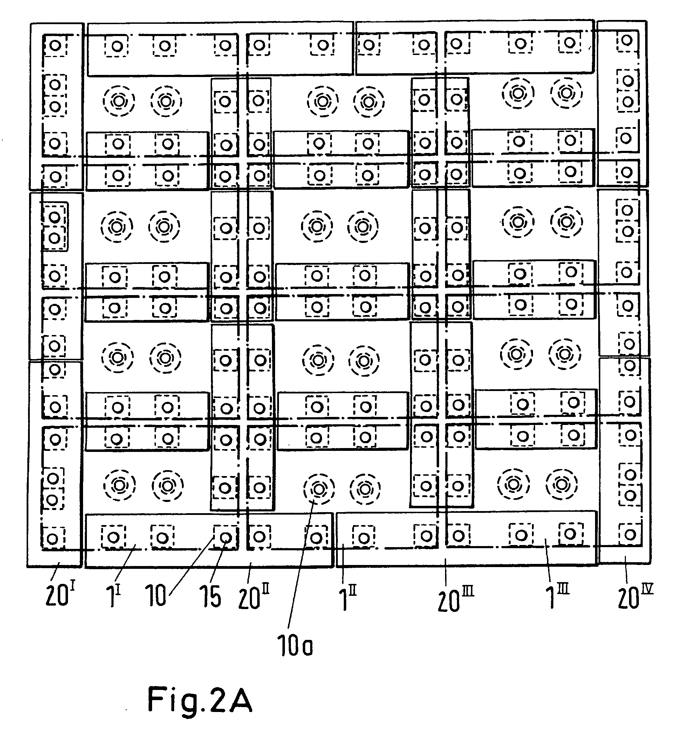

Fig. 2A zeigt ein Ausführungsbeispiel für die Verteilung der Bodenplatten in einer Lagergestellanordnung gemäss vorliegender Erfindung. Im gezeigten Ausführungsbeispiel umfasst die Lagergestellanordnung vier Reihen mit jeweils drei Lagergestellen 1^{I-III}. Selbstverständlich kann die die Anzahl der Reihen und die Anzahl der Lagergestelle in einer Reihe beliebig gewählt werden, um Lagergestellanordnungen der gewünschten Grösse zu bilden. Zusätzlich umfasst die Lagergestellanordnung im gezeigten Ausführungsbeispiel mehrere Bodenplatten 20^{I-IV}, wobei jeweils nebeneinander angeordnete Lagergestelle mit mindestens einer gemeinsamen Bodenplatte verbunden sind, und wobei die Bodenplatte oder Bodenplatten auf dem Boden des Lagerbeckens verschiebbar sind.

In einer vorteilhaften Ausführungsvariante sind die Lagergestelle 1^{I-III} jeweils mit Stützelementen 10 versehen, die fest mit den Lagergestellen verbunden sind. Die Verbindung der Lagergestelle mit der oder den Bodenplatten erfolgt in diesem Fall, über Verbindungen 15 und die Stützelemente. In einer weiteren vorteilhaften Ausführungsvariante können an den Lagergestellen 1^{I-III} zusätzlich Abstützungen 10a vorgesehen sein, um die Lagergestelle zwischen der oder den Bodenplatten auf dem Boden des Lagerbeckens abzustützen.

Die Länge der Bodenplatten kann weitgehend frei gewählt werden, solange mit der Bodenplatte zwei Lagergestelle verbunden werden können. In der Praxis kann es vorteilhaft sein, die Bodenplatten so lang zu wählen, dass mindestens zwei nebeneinander liegende Stützelemente desselben Lagergestells auf der Bodenplatte abgestützt werden können und/oder mittels der Bodenplatte mit den Stützelementen eines angrenzenden Lagergestells verbunden werden können. In einer weiteren vorteilhaften Ausführungsvariante sind die Bodenplatten am Umfang der Lagergestelle angeordnet, beispielsweise indem, wie in Fig. 2A gezeigt, im Wesentlichen am gesamten Umfang der Lagergestelle Bodenplatten angeordnet sind.

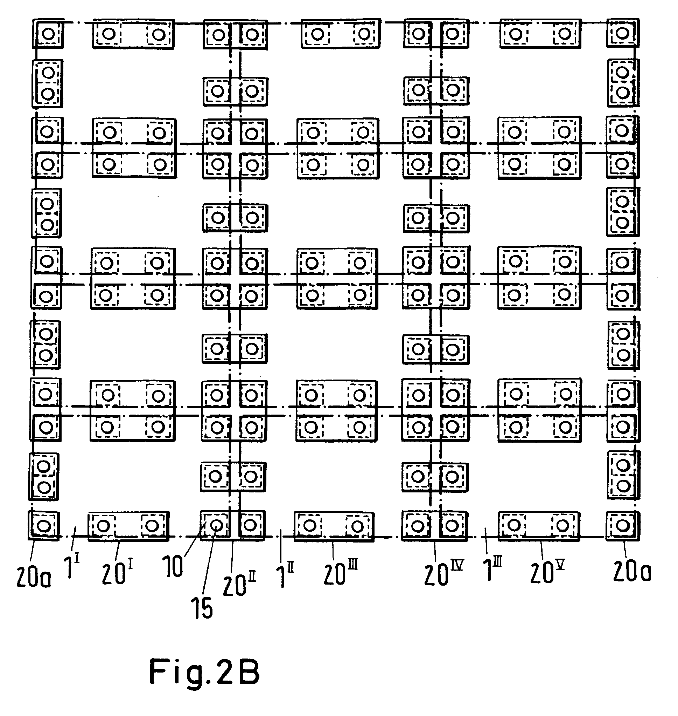

Fig. 2B zeigt ein zweites Ausführungsbeispiel für die Verteilung der Bodenplatten in einer Lagergestellanordnung gemäss vorliegender Erfindung. Im gezeigten Ausführungsbeispiel umfasst die Lagergestellanordnung vier Reihen mit jeweils drei Lagergestellen 1^{I-III}. Selbstverständlich kann die die Anzahl der Reihen und die Anzahl der Lagergestelle in einer Reihe beliebig gewählt werden, um Lagergestellanordnungen der gewünschten Grösse zu bilden. Zusätzlich umfasst die Lagergestellanordnung im gezeigten Ausführungsbeispiel mehrere Bodenplatten 20^{I-V}, wobei jeweils nebeneinander angeordnete Lagergestelle mit mindestens einer gemeinsamen Bodenplatte 20^{II}, 20^{IV} verbunden sind, und wobei die Bodenplatte oder Bodenplatten auf dem Boden des Lagerbeckens verschiebbar sind. Am Umfang der Lagergestellanordnung können weitere, auf dem Boden des Lagerbeckens verschiebbare Bodenplatten 20a, 20^{I}, 20^{III}, 20^{V} vorgesehen sein, um die Lagergestelle abzustützen.

In einer vorteilhaften Ausführungsvariante sind die Lagergestelle 1^{I-III} jeweils mit Stützelementen 10 versehen, die fest mit den Lagergestellen verbunden sind. Die Verbindung der Lagergestelle mit der oder den Bodenplatten erfolgt in diesem Fall, über Verbindungen 15 und die Stützelemente. In einer weiteren vorteilhaften Ausführungsvariante können an den Lagergestellen 1^{I-III} zusätzlich Abstützungen vorgesehen sein, um die Lagergestelle zwischen der oder den Bodenplatten auf dem Boden des Lagerbeckens abzustützen.

Die Länge der Bodenplatten kann weitgehend frei gewählt werden, solange mit der Bodenplatte zwei Lagergestelle verbunden werden können. In der Praxis kann es vorteilhaft sein, die Bodenplatten so lang zu wählen, dass mindestens zwei nebeneinander liegende Stützelemente desselben Lagergestells auf der Bodenplatte abgestützt werden können und/oder mittels der Bodenplatte mit den Stützelementen eines angrenzenden Lagergestells verbunden werden können.

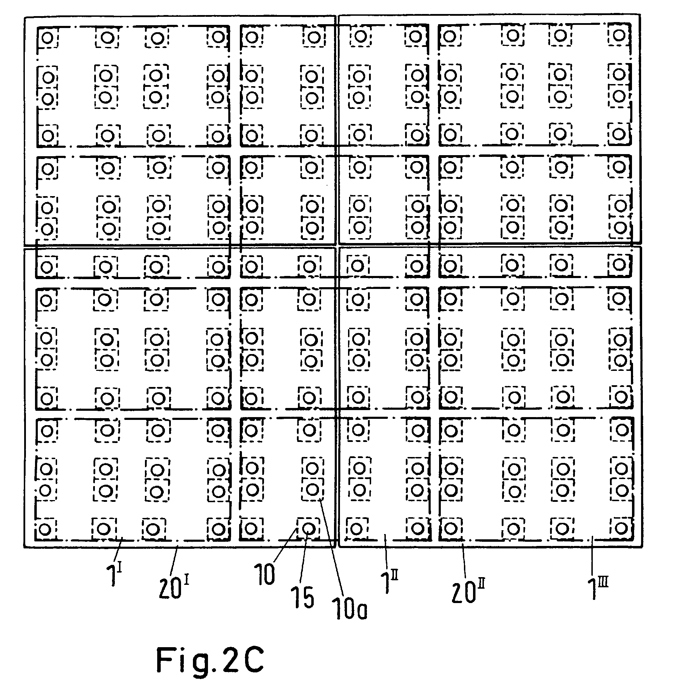

Fig. 2C zeigt ein drittes Ausführungsbeispiel für die Verteilung der Bodenplatten in einer Lagergestellanordnung gemäss vorliegender Erfindung. Im gezeigten Ausführungsbeispiel umfasst die Lagergestellanordnung vier Reihen mit jeweils drei Lagergestellen 1^{I-III}. Selbstverständlich kann die die Anzahl der Reihen und die Anzahl der Lagergestelle in einer Reihe beliebig gewählt werden, um Lagergestellanordnungen der gewünschten Grösse zusammenzustellen. Zusätzlich umfasst die Lagergestellanordnung im gezeigten Ausführungsbeispiel mehrere Bodenplatten 20^{I-II}, wobei jeweils nebeneinander angeordnete Lagergestelle mit mindestens einer gemeinsamen Bodenplatte verbunden sind, und wobei die Bodenplatte oder Bodenplatten auf dem Boden des Lagerbeckens verschiebbar sind.

In einer vorteilhaften Ausführungsvariante sind die Lagergestelle 1^{I-III} jeweils mit Stützelementen 10 versehen, die fest mit den Lagergestellen verbunden sind. Die Verbindung der Lagergestelle mit der oder den Bodenplatten 20^{I-II} erfolgt in diesem Fall, über Verbindungen 15 und die Stützelemente. In einer weiteren vorteilhaften Ausführungsvariante sind die Stützelemente 10, wie in Fig. 2C gezeigt, am Umfang der Lagergestelle angeordnet. Bei Bedarf können zusätzliche Stützelemente 10a vorgesehen sein, die innerhalb des Umfangs der Lagergestelle und beabstandet von demselben angeordnet sind, um die Lagergestelle auf der oder den Bodenplatten abzustützen.

Die Abmessungen der Bodenplatten kann weitgehend frei gewählt werden, solange mit einer Bodenplatte jeweils zwei Lagergestelle verbunden werden können. In der Praxis kann es vorteilhaft sein, die Bodenplatten so gross zu wählen, dass mindestens zwei nebeneinander liegende Stützelemente desselben Lagergestells auf der Bodenplatte abgestützt werden können und/oder mittels der Bodenplatte mit den Stützelementen eines angrenzenden Lagergestells verbunden werden können. In einer vorteilhaften Ausführungsvariante erstrecken sich die Bodenplatte oder Bodenplatten über mindestens 80% der Grundfläche der Lagergestellanordnung oder, wie in Fig. 2C gezeigt, im Wesentlichen über die gesamte Grundfläche der Lagergestellanordnung. In einer weiteren vorteilhaften Ausführungsvariante sind die Bodenplatte oder Bodenplatten, wie in Fig. 2C gezeigt, grösser als die Grundfläche eines Lagegestells.

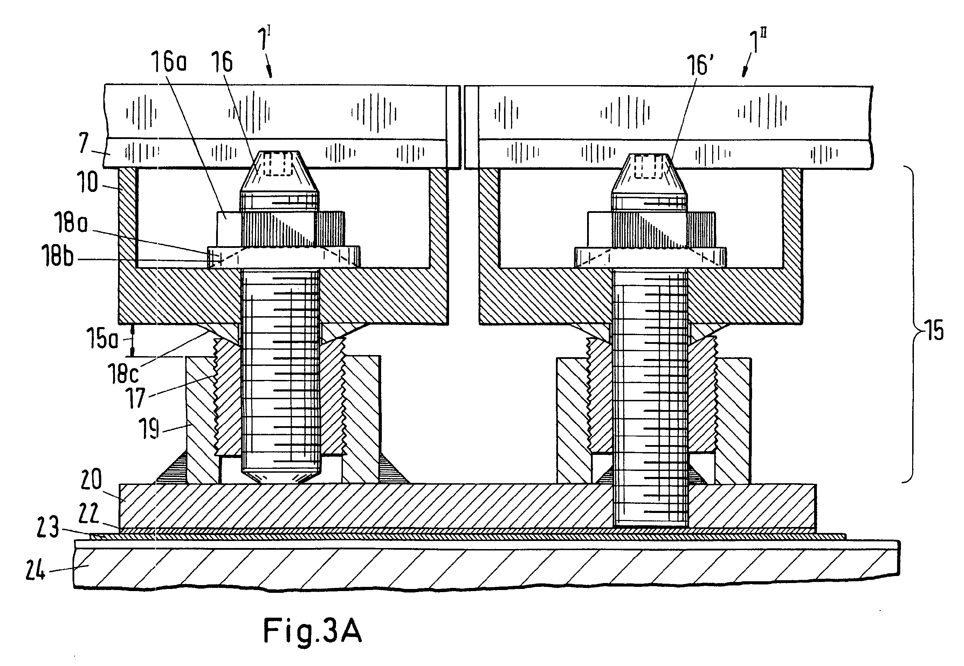

Fig. 3A zeigt ein Ausführungsbeispiel für die Verbindungen zwischen einer Bodenplatte 20 und zwei Lagergestellen 1^{I}, 1^{II} in einer Lagergestellanordnung gemäss vorliegender Erfindung. In einer vorteilhaften Ausführungsvariante sind die Lagergestelle 1^{I}, 1^{II} jeweils mit Stützelementen 10 versehen, die fest mit den Lagergestellen verbunden sind, beispielsweise mittels Schraubverbindungen oder geschweissten Verbindungen an einer Auflageplatte 7 des jeweiligen Lagergestells. Die Verbindung der Lagergestelle mit der Bodenplatte erfolgt in diesem Fall, über die Stützelemente. In einer vorteilhaften Ausführungsform sind die Lagergestelle jeweils über eine höhenverstellbare Verbindung 15 mit der Bodenplatte 20 verbunden. Mittels der höhenverstellbaren Verbindungen können Unebenheiten des Lagerbeckenbodens ausgeglichen werden. Die Verstellrichtung der höhenverstellbaren Verbindung ist in Fig. 3A mit einem Doppelpfeil 15a angegeben.

Vorteilhafterweise umfasst die höhenverstellbare Verbindung 15 ein erstes Verbindungsteil 19 mit Innengewinde und ein dazu passendes zweites Verbindungsteil 17 mit Aussengewinde, das ins erste Verbindungsteil eingeschraubt ist, um durch Verdrehen der Verbindungsteile gegeneinander die gewünschte Verbindungshöhe einzustellen. Die Verbindungsteile können beispielsweise, wie in Fig. 3A gezeigt, als Hülsen ausgeführt sein, wobei in diesem Fall die innere Hülse 17 zusätzlich mit einem Innengewinde versehen sein kann, um einen Schraubbolzen 16, 16' aufzunehmen.

Die höhenverstellbaren Verbindungen können bei Bedarf kegelförmige oder kugelförmige Auflageelemente 17, 18a-c enthalten, um Winkelabweichungen zwischen den Lagergestellen und der Bodenplatte auszugleichen. Vorteilhafterweise umfassen die kegelförmigen oder kugelförmigen Auflageelemente ein erstes Auflageelement 18a mit kegel- oder kugelförmiger Vertiefung und ein dazu passendes zweites Auflageelement 18b mit kegel-oder kugelförmiger Ausbuchtung, die auf der Oberseite des Stützelements 10 angeordnet sein können, sowie ein drittes Auflageelement 18c mit kegel- oder kugelförmiger Ausbuchtung und ein dazu passendes viertes Auflageelement 17 mit kegel- oder kugelförmiger Vertiefung, die auf der Unterseite des Stützelements 10 angeordnet sein können. Die Auflageelemente können zum Beispiel, wie in Fig. 3A gezeigt, als Unterlagsscheiben ausgeführt und/oder am Stützelement und/oder an einer Auflageplatte 7 eines Lagergestells und/oder an einem Verbindungsteil der höhenverstellbaren Verbindung 15 ausgebildet sein.

In einer weiteren vorteilhaften Ausführungsform sind die Lagergestelle 1^{I}, 1^{II} über Schraubverbindungen, beispielsweise mittels Schrauben oder Gewindebolzen 16, 16' und bei Bedarf mittels Muttern 16a, mit der Bodenplatte 20 verbunden. In Fig. 3A sind zwei mögliche Ausführungsvarianten für die Schraubverbindung gezeigt. In der in der linken Hälfte von Fig. 3A gezeigten Ausführungsvariante ist der Gewindebolzen 16 über eine Hülse 19 mit der Bodenplatte 20 verbunden, wobei die Hülse fest mit der Bodenplatte verbunden ist, während in der in der rechten Hälfte von Fig. 3A gezeigten Ausführungsvariante der Gewindebolzen 16' fest mit der Bodenplatte verbunden ist. Vorteilhafterweise sind in der Bodenplatte Gewinde und Schraubverbindungen ausgebildet, oder es können, wie in der rechten Hälfte von Fig. 3A gezeigt, an der Bodenplatte Gewindebolzen 16' vorgesehen sein, die bei Bedarf fest mit Bodenplatte verbunden sind.

Unabhängig von der Ausführungsform und Ausführungsvariante der Verbindung zwischen der Bodenplatte 20 und den Lagergestellen 1^{I}, 1^{II} ist die Bodenplatte auf dem Boden 24 des Lagerbeckens verschiebbar. Fallweise kann auf dem Boden 24 des Lagerbeckens eine Auskleidung 23 vorgesehen sein, auf der die Bodenplatte und/oder Lagergestelle verschiebbar sind. Die Auskleidung 23 dient zum Abdichten Lagerbeckens und kann beispielsweise aus Stahl hergestellt sein. In einer vorteilhaften Ausführungsform ist die Bodenplatte 20 auf der Unterseite mit einer zusätzlichen Gleitschicht 22, beispielsweise einer Chromschicht, versehen.

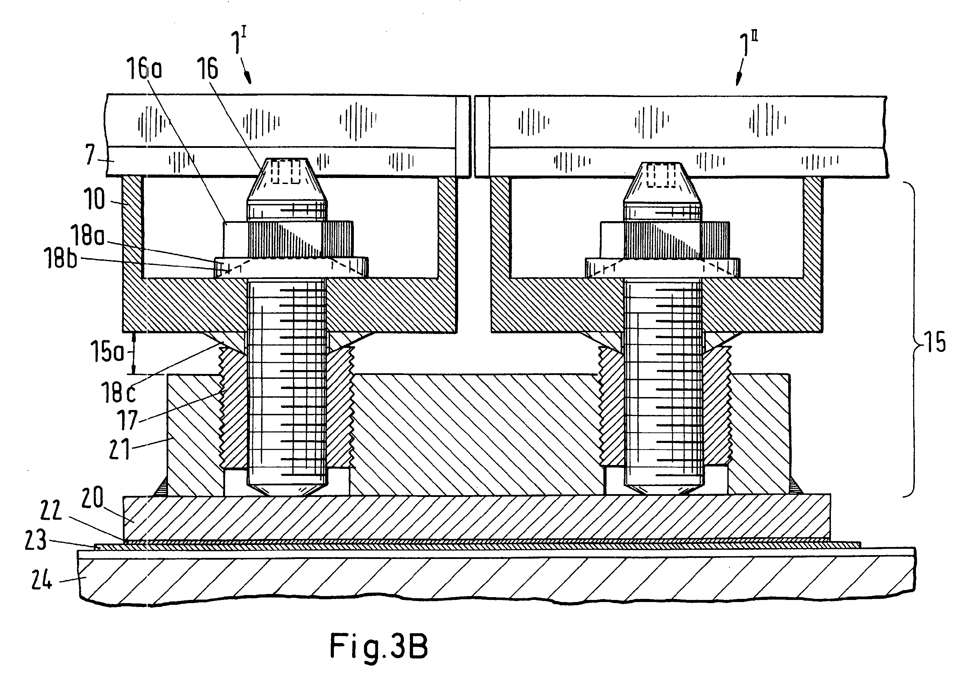

Fig. 3B zeigt ein zweites Ausführungsbeispiel für die Verbindungen 15 zwischen einer Bodenplatte 20 und zwei Lagergestellen 1^{I}, 1^{II} in einer Lagergestellanordnung gemäss vorliegender Erfindung. Das zweite Ausführungsbeispiel unterscheidet sich von dem in Fig. 3A gezeigten Ausführungsbeispiel lediglich durch die Art der Verankerung der Verbindungen 15 an der Bodenplatte. Die Verankerung der Verbindungen15 an der Bodenplatte erfolgt im zweiten Ausführungsbeispiel über eine Verstärkungsrippe oder Strebe 21, die an der Bodenplatte 20 vorgesehen ist.

Bezüglich Einzelheiten zum Aufbau der Verbindung 15 und möglichen Ausführungsformen und -varianten wird auf das oben stehende erste Ausführungsbeispiel für die Verbindungen zwischen einer Bodenplatte und zwei Lagergestellen verwiesen, das im Rahmen der Beschreibung der Fig. 3A erläutert wurde.

Die Verstärkungsrippe 21 kann beispielsweise, wie in Fig. 3B gezeigt, als Platte ausgebildet sein, die an der Bodenplatte 20 befestigt ist. Es ist jedoch auch möglich die Verstärkungsrippe 21 an der Bodenplatte auszubilden oder gegebenenfalls einfach eine dicke Bodenplatte zu verwenden.

In einer vorteilhaften Ausführungsform sind die Lagergestelle jeweils über eine höhenverstellbare Verbindung 15 mit der Bodenplatte 20 verbunden. Die Verstellrichtung der höhenverstellbaren Verbindung ist in Fig. 3B mit einem Doppelpfeil 15a angegeben. Vorteilhafterweise sind in der Verstärkungsrippe 21 Bohrungen mit Innengewinden vorgesehen, in die ein dazu passendes Verbindungsteil 17 mit Aussengewinde eingeschraubt werden kann, um durch Verdrehen des Verbindungsteils die gewünschte Verbindungshöhe einzustellen. Das Verbindungsteil kann beispielsweise, wie in Fig. 3B gezeigt, als Hülse ausgeführt sein, die bei Bedarf mit einem Innengewinde versehen sein kann, um einen Schraubbolzen 16 aufzunehmen.

In einer weiteren vorteilhaften Ausführungsform sind die Lagergestelle 1^{I}, 1^{II} über Schraubverbindungen, beispielsweise mittels Schrauben oder Gewindebolzen 16 und bei Bedarf mittels Muttern 16a, mit der Bodenplatte 20 verbunden. Vorteilhafterweise sind in der Verstärkungsrippe Gewinde und Schraubverbindungen ausgebildet, oder es sind an der Verstärkungsrippe Gewindebolzen 16 vorgesehen sein, die bei Bedarf fest mit der Verstärkungsrippe verbunden sind. Vorteilhafterweise hat die Verstärkungsrippe und/oder die Bodenplatte eine Dicke, die grösser ist als der Durchmesser der verwendeten Schraub- oder Verbindungsbolzen.

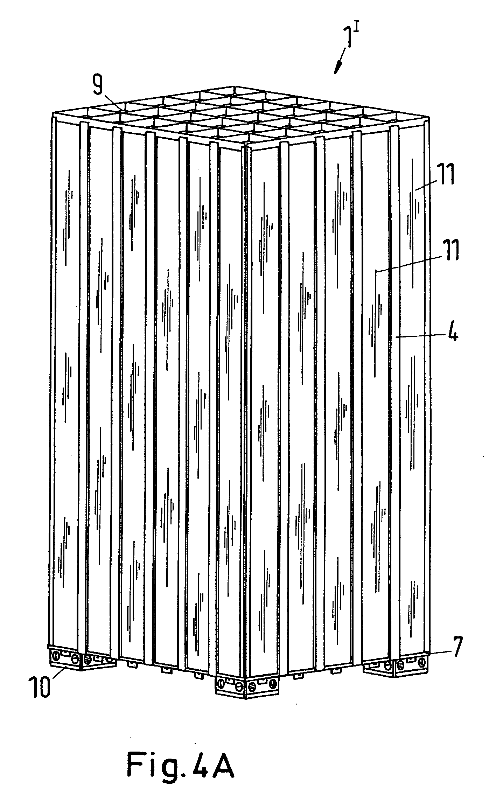

Fig. 4A zeigt ein Ausführungsbeispiel eines Lagergestells zur Verwendung in einer Lagergestellanordnung zum Lagern nuklearer Brennelemente gemäss vorliegender Erfindung. Das Lagergestell 1^{I} umfasst im gezeigten Ausführungsbeispiel eine Kanalstruktur, die mehrere, nebeneinander angeordnete Kanäle 9 mit Wänden 11 zur Aufnahme der Brennelemente enthält, und eine Auflageplatte 7, die mit der Kanalstruktur verbunden ist. Weiter kann das Lagergestell 1^{I} beispielsweise Streben 4 umfassen, die mit der Auflageplatte 7 und dem oberen Teil der Kanalstruktur verbunden sein können. Fallweise sind im oberen Teil der Kanalstruktur ein Gitterrost und/oder eine Abschlussplatte vorgesehen, mit denen die Streben 4 verbunden sein können.

In einer vorteilhaften Ausführungsform können die Brennelemente auf der Auflageplatte 7 abgestützt werden. Hierzu kann die Auflageplatte 7 mit Durchbrüchen und/oder Schlitzen versehen und an der Kanalstruktur und/oder den Wänden 11 der Kanäle 9 können vorstehende Nocken ausgebildet sein, die in oder durch die Durchbrüche beziehungsweise Schlitze der Auflageplatte gesteckt und auf der der Kanalstruktur gegenüberliegenden Seite der Auflageplatte verankert und/oder gegen Herausziehen gesichert sind. Diese Ausführungsform hat den Vorteil, dass die Auflageplatte eine vergleichsweise geringe Materialstärke aufweisen kann, da die Auflageplatte durch die Verbindung mit der Kanalstruktur genügend versteift wird, um das Gewicht der Brennelemente aufzunehmen.

Die Nocken können zum Beispiel, wie in Fig. 4A gezeigt, auf der der Kanalstruktur gegenüberliegenden Seite der Auflageplatte 7 vorstehen und mittels Verriegelungselementen verankert sein, beispielsweise mittels Keilen und/oder geraden oder konischen Bolzen und/oder Splinten.

Vorteilhafterweise sind die Kanalstruktur und/oder die Wände 11 der Kanäle 9 aus Neutronen absorbierendem Material, wie beispielsweise einer Borlegierung oder Bor dotiertem Stahl, aufgebaut oder enthalten Neutronen absorbierendes Material. Die Kanalstruktur kann bei Bedarf doppelwandig ausgeführt sein.

In einer weiteren vorteilhaften Ausführungsform umfasst das Lagergestell 1^{I} zusätzlich eines oder mehrere Stützelemente 10 zum Abstützen des Lagergestells und/oder der Auflageplatte. Die Stützelemente können zum Beispiel an den Nocken der Kanalstruktur ausgerichtet oder zentriert sein. Die Stützelemente 10 sind fallweise aus Blech oder Blechteilen geformt, wobei die seitlichen Bleche oder Blechteile der Stützelemente vorteilhafterweise auf der der Kanalstruktur gegenüberliegenden Seite der Auflageplatte direkt unter den Wänden 11 der Kanäle 9 angeordnet sind. Vorteilhafterweise sind die Stützelemente 10 an wählbaren Positionen der Auflageplatte fixierbar, beispielsweise mittels Bolzen und/oder Schrauben.

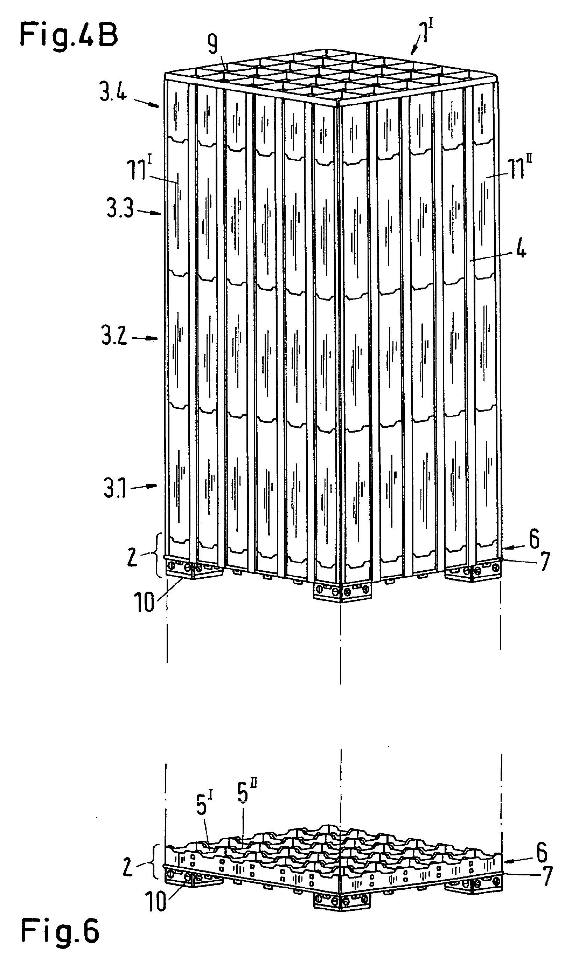

Fig. 4B zeigt ein zweites Ausführungsbeispiel eines Lagergestells zur Verwendung in einer Lagergestellanordnung zum Lagern nuklearer Brennelemente gemäss vorliegender Erfindung. Das Lagergestell 1^{I} umfasst im gezeigten Ausführungsbeispiel eine Kanalstruktur, die mehrere, nebeneinander angeordnete Kanäle 9 mit Wänden zur Aufnahme der Brennelemente enthält, und eine Auflageplatte 7, die mit der Kanalstruktur verbunden ist.

In einer vorteilhaften Ausführungsform umfasst das Lagergestell 1^{I} eine Grundeinheit 2 und eine oder mehrere, übereinander angeordnete Gittereinheiten 3.1 - 3.4, die auf der Grundeinheit abgestützt sind, und die aus Blechteilen 11^{I}, 11^{II} aufgebaut sind, welche die Wände der Kanäle 9 bilden, und welche zum Beispiel kreuzweise angeordnet sind. Die Grundeinheit 2 umfasst die Auflageplatte 7 und einen mit derselben verbundenen Gitterrost 6. Eine vorteilhafte Ausführungsform der Grundeinheit ist in Fig. 6 gezeigt, die in einem nachstehenden Abschnitt beschrieben ist. Weiter kann das Lagergestell 1 beispielsweise Streben 4 umfassen, die mit der Grundeinheit 2 und der obersten Gittereinheit und fallweise weiteren Gittereinheiten verbunden sein können.

Vorteilhafterweise sind der Gitterrost 6 der Grundeinheit 2 und/oder die Gittereinheiten 3.1 - 3.4 aus Neutronen absorbierendem Material, wie beispielsweise einer Borlegierung oder Bor dotiertem Stahl, aufgebaut oder enthalten Neutronen absorbierendes Material. Der Gitterrost 6 der Grundeinheit und/oder die Gittereinheiten können bei Bedarf doppelwandig ausgeführt sein.

In einer weiteren vorteilhaften Ausführungsform umfasst das Lagergestell 1 zusätzlich eines oder mehrere Stützelemente 10 zum Abstützen des Lagergestells und/oder der Auflageplatte. Die Stützelemente können zum Beispiel an den Nocken der Kanalstruktur ausgerichtet oder zentriert sein. Die Stützelemente 10 sind fallweise aus Blech oder Blechteilen geformt, wobei die seitlichen Bleche oder Blechteile der Stützelemente vorteilhafterweise auf der der Kanalstruktur gegenüberliegenden Seite der Auflageplatte direkt unter den Wänden 11 der Kanäle 9 angeordnet sind. Vorteilhafterweise sind die Stützelemente 10 an wählbaren Positionen der Auflageplatte fixierbar, beispielsweise mittels Bolzen und/oder Schrauben.

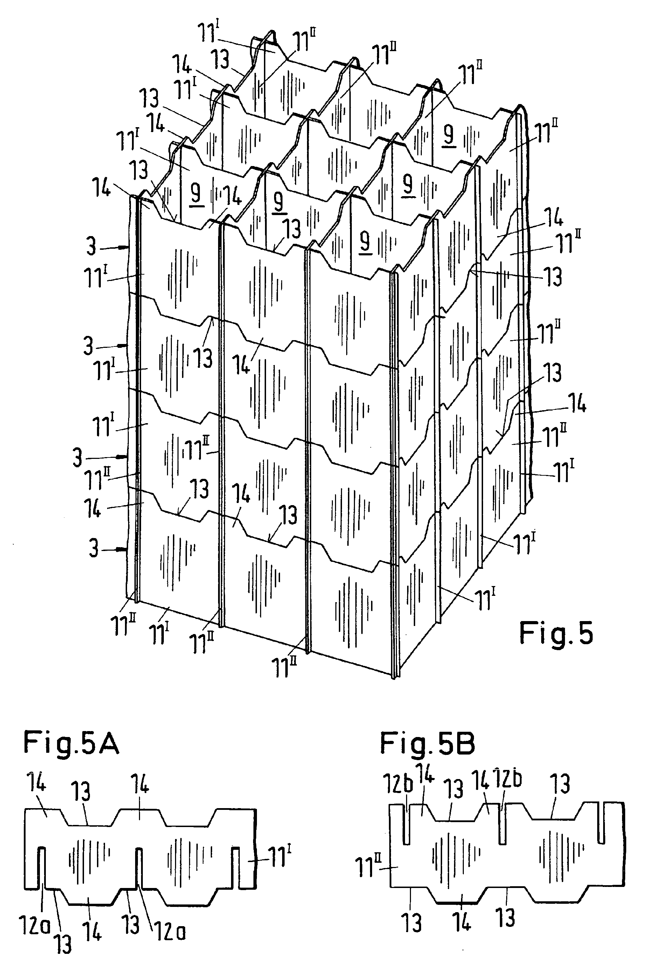

Fig. 5 zeigt eine Ausführungsform der Kanalstruktur für ein Lagegestell gemäss Fig. 4B. Die gezeigte Kanalstruktur enthält mehrere Gittereinheiten 3, die mit vertikalen Kanälen 9 zur Aufnahme der Brennelemente versehen sind. Die Wände der Kanäle werden durch sich kreuzende Blechteile oder -streifen 11^{I}, 11^{II} gebildet, welche in übereinander stapelbaren, formstabilen Gittereinheiten 3 angeordnet sind, die jeweils eine Montageeinheit bilden. Die Blechteile können zum Beispiel aus einem Neutronen absorbierenden Material hergestellt sein oder die Wände können ein Neutronen absorbierenden Material enthalten. In einer vorteilhaften Ausführungsvariante sind die Gittereinheiten 3 je mit mehreren an den unteren und oberen Rändern der Blechteile 11^{I}, 11^{II} ausgebildeten Ausnehmungen 13 und mit mehreren vorstehenden, den Ausnehmungen der benachbarten Gittereinheiten zugeordneten Kupplungselementen 14 versehen, die so ausgebildet sind, dass bei aufeinander aufgesetzten Gittereinheiten die Kupplungselemente und die Ausnehmungen benachbarter Gittereinheiten zumindest teilweise formschlüssig ineinandergreifen. Diese Bauweise gestattet es, den Zusammenbau des Lagergestells zu mechanisieren, und ermöglicht in einfacher Weise, die Höhe des Lagergestells an die Länge der Brennelemente anzupassen.

Eine Ausführungsform einer einzelnen Gittereinheit wird im Folgenden an Hand der Figuren 5, 5A und 5B näher beschrieben. Die Gittereinheit 3 umfasst in dieser Ausführungsform zwei Gruppen von jeweils parallelen Blechteilen oder -streifen 11^{I}, 11^{II}, wobei die Blechteile der ersten Gruppe sich mit den Blechteilen der zweiten Gruppe kreuzen. Die Figuren 5A und 5B zeigen jeweils eine typische Ausführungsform der Blechteile 11^{I}, 11^{II}. Die Blechteile 11^{I} der ersten Gruppe könne zum Beispiel am unteren Rand mit Einschnitten 12a versehen sein und die Blechteile 11^{II} der zweiten Gruppe am oberen Rand mit Einschnitten 12b, so dass beim Ineinanderfügen der Einschnitte 12a und 12b eine Verbindung zwischen den sich kreuzenden Blechteilen der ersten und zweiten Gruppe entsteht, durch welche die Blechteile gegenseitig in ihrer Lage gehalten und zu einer verwindungssteifen Gittereinheit zusammengefasst sind.

Fig. 6 zeigt eine Ausführungsform der Grundeinheit für ein Lagegestell gemäss Fig. 4B. Die gezeigte Grundeinheit umfasst eine Auflageplatte 7 und einen aus Blechteilen 5^{I}, 5^{II} und/oder Gitterelementen gebildeten Gitterrost 6. In einer vorteilhaften Ausführungsvariante umfasst die Grundeinheit 2 zwei Gruppen von jeweils parallelen Blechteilen oder -streifen 5^{I}, 5^{II}, wobei die Blechteile der ersten Gruppe sich mit den Blechteilen der zweiten Gruppe kreuzen. Die Blechteile 5^{I} der ersten Gruppe könne zum Beispiel am unteren Rand mit Einschnitten versehen sein und die Blechteile 5^{II} der zweiten Gruppe am oberen Rand mit Einschnitten, so dass beim Ineinanderfügen der Einschnitte eine Verbindung zwischen den sich kreuzenden Blechteilen der ersten und zweiten Gruppe entsteht, durch welche die Blechteile gegenseitig in ihrer Lage gehalten und zu einem verwindungssteifen Gitterrost 6 zusammengefasst sind.

In einer vorteilhaften Ausführungsvariante sind die Brennelemente auf der Auflageplatte 7 abstützbar. Hierzu können die einzelnen Blechteile 5^{I}, 5^{II} des Gitterostes jeweils auf der der Auflageplatte zugewandten Seite mit Nocken versehen sein, während die Auflageplatte an Stellen, an denen sich im Gitterrost Nocken befinden, Durchbrüche wie beispielsweise Schlitze aufweist, in oder durch welche die Nocken in zusammengebautem Zustand der Grundeinheit eingeführt oder gesteckt und auf der dem Gitterrost gegenüberliegenden Seite der Auflageplatte verankert und/oder gegen Herausziehen gesichert werden können. Diese Ausführungsform hat den Vorteil, dass die Auflageplatte eine vergleichsweise geringe Materialstärke aufweisen kann, da die Auflageplatte durch die Verbindung mit dem Gitterrost genügend versteift wird, um das Gewicht der Brennelemente aufzunehmen.

Die Auflageplatte ist typischerweise 4 mm bis 20 mm oder 4 mm bis 16 mm oder 6 mm bis 16 mm dick, so dass die Bearbeitung derselben beispielsweise mittels eines Lasers erfolgen kann. Die Nocken können zum Beispiel, wie in Fig. 6 gezeigt, auf der der Kanalstruktur gegenüberliegenden Seite der Auflageplatte 7 vorstehen und mittels Verriegelungselementen verankert sein, beispielsweise mittels Keilen und/oder geraden oder konischen Bolzen und/oder Splinten.

In einer weiteren vorteilhaften Ausführungsvariante umfasst die Grundeinheit 2, wie in Fig. 6 gezeigt, zusätzlich eines oder mehrere Stützelemente 10 zum Abstützen des Lagergestells. Die Stützelemente können zum Beispiel an den Nocken der Blechteile 5^{I}, 5^{II} oder Gitterelemente der Grundeinheit ausgerichtet oder zentriert sein. Die Stützelemente 10 sind fallweise aus Blech oder Blechteilen geformt, wobei die seitlichen Bleche oder Blechteile der Stützelemente vorteilhafterweise auf der dem Gitterrost 6 gegenüberliegenden Seite der Auflageplatte 7 direkt unter den Blechteilen 5^{I}, 5^{II} oder Gitterelementen des Gitterrostes angeordnet sind. Vorteilhafterweise sind die Stützelemente 10 an wählbaren Positionen der Auflageplatte 7 fixierbar, beispielsweise mittels Bolzen und/oder Schrauben.

Die erfindungsgemässe Lagergestellanordnung und Bodenplatte für eine Lagergestellanordnung haben den Vorteil, dass dank der Bodenplatte oder den Bodenplatten eine stabile Verbindung zwischen den Lagergestellen besteht beziehungsweise hergestellt werden kann. Darüber hinaus kann dank der Verbindung über die Bodenplatte oder Bodenplatten die Erdbebesicherheit von Lagergestellanordnungen zum Lagern nuklearer Brennelemente gegenüber dem eingangs beschriebenen Stand der Technik erhöht werden, indem sowohl die Horizontalkomponente als auch die Vertikalkomponente von Erschütterungen wirksam bedämpft werden.

## Patentansprüche

1. Lagergestellanordnung zum Lagern nuklearer Brennelemente in einem Lagerbecken, wobei die Lagergestellanordnung (1) mindestens zwei Lagergestelle (1^{I-IV}) umfasst, die jeweils mehrere vertikale, nebeneinander angeordnete Kanäle (9) zur Aufnahme der Brennelemente enthalten, **dadurch gekennzeichnet, dass** die Lagergestellanordnung (1) zusätzlich eine oder mehrere Bodenplatten (20, 20^{I-V}) umfasst, dass jeweils nebeneinander angeordnete Lagergestelle mit mindestens einer gemeinsamen Bodenplatte verbunden sind, und dass die Bodenplatte oder Bodenplatten (20, 20^{I-V}) auf dem Boden (24) des Lagerbeckens verschiebbar sind.

2. Lagergestellanordnung nach Anspruch 1, wobei die Lagergestelle (1^{I-IV}) auf der oder den Bodenplatten (20, 20^{I-V}) abgestützt sind.

3. Lagergestellanordnung nach einem der Ansprüche 1 oder 2, wobei die Lagergestelle (1^{I-IV}) zusammen mit der oder den Bodenplatten (20, 20^{I-V}) auf dem Boden (24) des Lagerbeckens verschiebbar sind.

4. Lagergestellanordnung nach einem der vorangehenden Ansprüche, wobei die Bodenplatten (20, 20^{I-V}) am Umfang der Lagergestelle (1^{I-IV}) angeordnet sind, oder wobei im Wesentlichen am gesamten Umfang der Lagergestelle Bodenplatten angeordnet sind.

5. Lagergestellanordnung nach einem der vorangehenden Ansprüche, wobei sich die Bodenplatte oder Bodenplatten (20, 20^{I-V}) über mindestens 80% der Grundfläche der Lagergestellanordnung (1) erstrecken oder im Wesentlichen über die gesamte Grundfläche der Lagergestellanordnung.

6. Lagergestellanordnung nach einem der vorangehenden Ansprüche, wobei die Bodenplatte oder Bodenplatten (20, 20^{I-V}) grösser als die Grundfläche eines Lagegestells (1^{I-IV}) sind.

7. Lagergestellanordnung nach einem der vorangehenden Ansprüche, wobei die Lagergestelle (1^{I-IV}) jeweils über eine oder mehrere höhenverstellbare Verbindungen (15) mit der oder den Bodenplatten (20, 20^{I-V}) verbunden sind.

8. Lagergestellanordnung nach Anspruch 7, wobei die höhenverstellbaren Verbindungen (15) kegelförmige oder sphärische Auflageelemente (17, 18a-c) enthalten.

9. Lagergestellanordnung nach einem der vorangehenden Ansprüche, wobei die Lagergestelle (1^{I-IV}) jeweils über Schraubverbindungen mit der oder den Bodenplatten (20, 20^{I-V}) verbunden sind.

10. Lagergestellanordnung nach einem der vorangehenden Ansprüche, wobei in der oder den Bodenplatten (20, 20^{I-V}) Gewinde und Schraubverbindungen ausgebildet sind, oder wobei an der oder den Bodenplatten (20, 20^{I-V}) Gewindebolzen (16, 16') vorgesehen sind.

## Claims

1. A storage rack assembly for storing nuclear fuel elements in a basin, wherein the storage rack assembly (1) comprises at least two storage racks (1^{I-IV}), each comprising plural vertical channels (9) arranged next to each other for receiving the fuel elements, **characterized in that** the storage rack assembly (1) additionally comprises one or more bottom plates (20, 20^{I-V}), respectively next to each other arranged storage racks are connected to at least one common bottom plate, and the bottom plate or bottom plates (20, 20^{I-V}) are slidable on the bottom (24) of the basin.

2. The storage rack assembly according to claim 1, wherein the storage racks (1^{I-IV}) are supported on the bottom plate or the bottom plates (20, 20^{I-V}).

3. The storage rack assembly according to claim 1 or 2, wherein the storage racks (1^{I-IV}), are slidable together with the bottom plate or the bottom plates (20, 20^{I-V}) on the bottom (24) of the basin.

4. The storage rack assembly according to any one of the preceding claims, wherein the bottom plates (20, 20^{I-IV}) are arranged at the circumference of the storage racks (1^{I-IV}), or wherein bottom plates are arranged substantially at the entire circumference of the storage racks.

5. The storage rack assembly according to any one of the preceding claims, wherein the bottom plate or the bottom plates (20, 20^{I-V}) extend over at least 80% of the base area of the storage rack assembly (1), or substantially over the entire base area of the storage rack assembly.

6. The storage rack assembly according to any one of the preceding claims, wherein the bottom plate or the bottom plates (20, 20^{I-V}) are larger than the base area of a storage rack (1^{I-IV}).

7. The storage rack assembly according to any one of the preceding claims, wherein the storage racks (1^{I-IV}) are respectively connected to the bottom plate or the bottom plates (20, 20^{I-V}) via one or more connections (15) adjustable in height.

8. The storage rack assembly according to claim 7, wherein the connections (15) adjustable in height comprise conical or spherical bearing elements (17, 18a-c).

9. The storage rack assembly according to any one of the preceding claims, wherein the storage racks (1^{I-IV}) are respectively connected to the bottom plate or the bottom plates (20, 20^{I-V}) via screw connections.

10. The storage rack assembly according to any one of the preceding claims, wherein threads and screw connections are provided in the bottom plate or the bottom plates (20, 20^{I-V}), or wherein threaded bolts (16, 16^{I}) are provided at the bottom plate or the bottom plates (20, 20^{I-V}).

## Revendications

1. Dispositif de râteliers de stockage pour stocker des éléments combustibles nucléaires dans une piscine de stockage, le dispositif de râteliers de stockage (1) comprenant au moins deux râteliers de stockage (1^{I-IV}) qui contiennent chacun plusieurs canaux (9) agencés verticalement les uns à côté des autres et destinés à recevoir les éléments combustibles, **caractérisé en ce que** le dispositif de râteliers de stockage (1) comprend en outre une ou plusieurs plaques de fond (20, 20^{I-V}), **en ce que** des râteliers de stockage agencés respectivement les uns à côté des autres sont assemblés à au moins une plaque de fond commune et **en ce que** la plaque de fond ou les plaques de fond (20, 20^{I-V}) peuvent être déplacées sur le fond (24) de la piscine de stockage.

2. Dispositif de râteliers de stockage selon la revendication 1, dans lequel les râteliers de stockage (1^{I-IV}) sont appuyés sur la ou les plaques de fond (20, 20^{I-V}).

3. Dispositif de râteliers de stockage selon l'une des revendications 1 ou 2, dans lequel les râteliers de stockage (1^{I-IV}) peuvent être déplacés, conjointement avec la ou les plaques de fond (20, 20^{I-V}), sur le fond (24) de la piscine de stockage.

4. Dispositif de râteliers de stockage selon l'une des revendications précédentes, dans lequel les plaques de fond (20, 20^{I-V}) sont agencées sur la périphérie des râteliers de stockage (1^{I-IV}) ou dans lequel des plaques de fond sont agencées globalement sur toute la périphérie des râteliers de stockage.

5. Dispositif de râteliers de stockage selon l'une des revendications précédentes, dans lequel la ou les plaques de fond (20, 20^{I-V}) s'étendent sur au moins 80 % de la surface de base du dispositif de râteliers de stockage (1) ou globalement sur toute la surface de base du dispositif de râteliers de stockage.

6. Dispositif de râteliers de stockage selon l'une des revendications précédentes, dans lequel la ou les plaques de fond (20, 20^{I-V}) sont plus grandes que la surface de base d'un râtelier de stockage (1^{I-IV}).

7. Dispositif de râteliers de stockage selon l'une des revendications précédentes, dans lequel les râteliers de stockage (1^{I-IV}) sont assemblés à chaque fois par l'intermédiaire d'un ou plusieurs assemblages (15) réglables en hauteur à la ou les plaques de fond (20, 20^{I-V}).

8. Dispositif de râteliers de stockage selon la revendication 7, dans lequel les assemblages (15) réglables en hauteur contiennent des éléments de support (17, 18a-c) coniques ou sphériques.

9. Dispositif de râteliers de stockage selon l'une des revendications précédentes, dans lequel les râteliers de stockage (1^{I-IV}) sont assemblés à chaque fois par l'intermédiaire d'assemblages à vis à la ou les plaques de fond (20, 20^{I-V}).

10. Dispositif de râteliers de stockage selon l'une des revendications précédentes, dans lequel des filetages et des assemblages à vis sont conçus dans la ou les plaques de fond (20, 20^{I-V}) ou dans lequel des boulons filetés (16, 16') sont prévus sur la ou les plaques de fond (20, 20^{I-V}).
